# EUROPEAN PATENT APPLICATION

(11) **EP 0 757 950 A2**
(43) Date of publication of application: **12.02.1997**
(21) Application number: 96112508.5
(22) Date of filing: 02.08.1996
(51) Int. Cl.: B62K 11/10

(54) **Reticulate beam frame for scooters and scooters made with such a frame**

(30) Priority: 08.08.1995 IT BO950117 U
(71) Applicant: ITALJET S.p.A., 40068 San Lazzaro di Savena (Bologna) (IT)
(72) Inventor: Tartarini, Alessandro, 40068 San Lazzaro di Savena (Bologna) (IT); Tartarini, Leopoldo, 40068 San Lazzaro di Savena (Bologna) (IT)
(74) Representative: Porsia, Dino, Dr.

(57) **Abstract**

The frame of the scooter is formed by a strong reticulate beam (1), polygonally sectioned, prearranged for supporting the various components necessary to the running of the scooter itself. A large part of this beam is left in view and inside it are mounted the various shock absorbers, the air filter and/or other components. The shaft is limited to functional elements, such as the front small muzzle (20) with the headlights, the leg guard (21), the foot-board (22), the rear little trunk (23) with the seat.

## Description

The present scooters, with a piston displacement even higher than 500 cc, with the exception of those distinguished by the "Vespa" mark which have a sheet metal monocoque body, like motorcars, are generally equipped with a carrier frame with sustained section metallic tubes, folded, welded, with sheet metal reinforcements and with a plastic shaft

The discovery proposes a great structural and aesthetical innovation in the making of the frame for scooters, according to which, the frame itself, instead of being formed by the present sustained section tubes, which resist to mechanical stresses on the basis of their own geometric characteristics, is formed by a reticulate beam, of the type used in aeronautics construction, which proves more rigid, stronger and lighter than a traditional frame. The scooter made with such a reticulate beam frame will have characteristics of stability and driving response much higher than those of traditional scooters.

Greater characteristics of the discovery, and the advantages deriving from it, will appear more clearly from the following description made with reference to the Figures in the enclosed three table drawings, in which:
- Fig. 1 is a lateral elevation view of a reticulate beam frame for a scooter with front traditional type suspension;
- Fig. 2 is a lateral elevation view of a reticulate beam frame for a scooter with front oscillating arm suspension;
- Figs. 3 and 4 are plan views respectively of the frame in Figure 1 and of the frame in Figure 2.

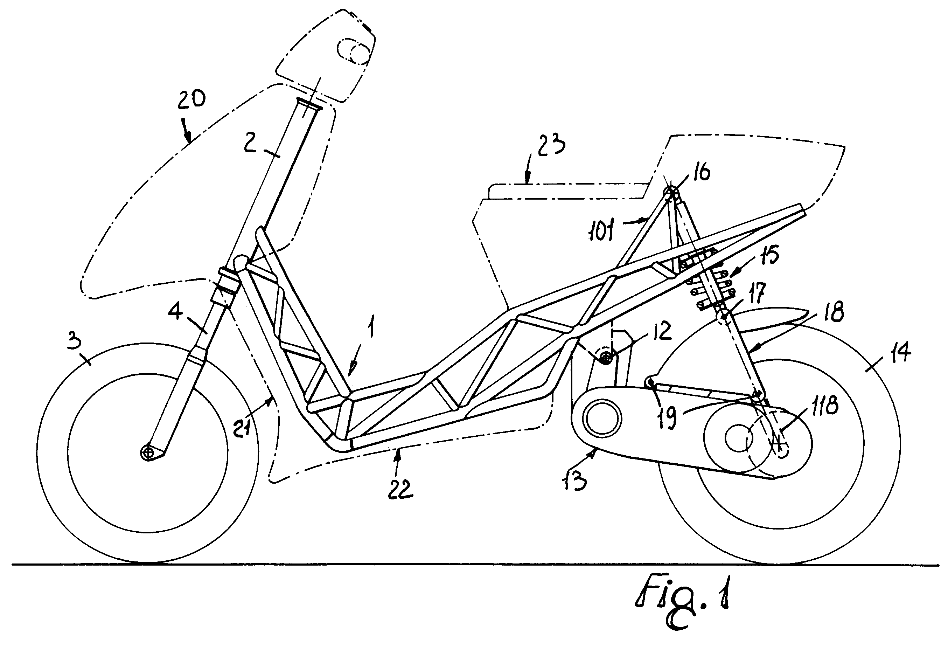

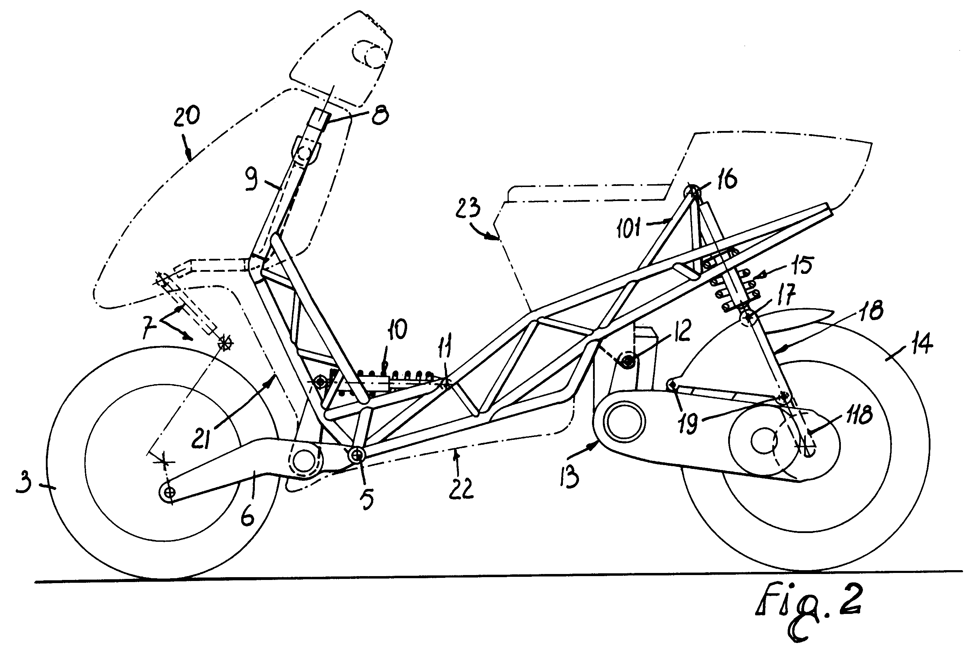

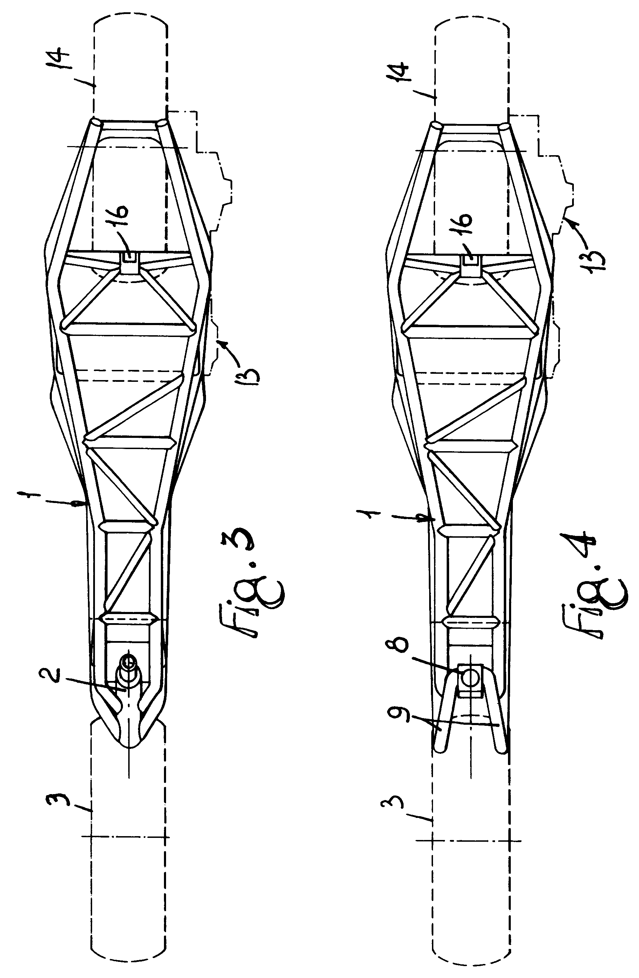

According to the discovery, the frame of the scooter is formed by a reticulate beam 1 in tubes or other small section metallic section bars, having a substantially "L" shaped lateral profile and with a polygonal type transversal section. In the solution of Figures 1 and 3, beam 1 is fixed at the front of the tube 2 of the steering, which supports the front wheel 3 by means of a traditional type suspension, for example of a telescopic and shock absorbed fork 4. In the solution of Figures 2 and 4, in the intermediate and lower part of the beam 1 it is transversally articulated in 5, also through a torsion bar, the known type arm 6 which rotationally supports and with the possibility of steering the front wheel 3, which through a known system of articulated return 7 is connected to the steering mounted on a box 8 fixed at the top of at least a couple of tubes 9 which with the lower part are fixed to the front face of the beam 1.

The arm 6 is equipped with an intermediate appendix 106, turned upwards and articulated to the shock absorber 10 fulcrated in 11 to the reticulate beam 1 and preferentially placed on the middle of such beam.

At the intermediate and rear part of the reticulate beam 1, it is transversally articulated in 12, in any known manner, the engine-gearbox group 13 which carries the back wheel 14 and which in its turn is connected in any known manner to the same beam 1 with at least one rear shock absorber. In the Figures 1 and 2, the rear shock absorber 15 is illustrated with a collocation protected by a separate patent application under the name of the same applicant, it is placed in the middle of the frame 1, it is articulated in 16 to an upper appendix 101 of the same reticulate beam frame (see also Figs. 3-4) and it is articulated in 17 to a decomposable bond 18 fixed to a part of the group 13, as indicated with 19 and rotationally constrained by the other part to the wheel axis 14, with the extension 118.

A large part of the beam 1 will be left in view, so as to characterise the scooter as a high technology product. The shaft, indifferently in plastic and/or metal, will be more reduced than that of present scooters and will be formed by functional elements such as: the front small muzzle 20 with the headlights and the possible little trunk; the leg guard 21 and the possible lower foot-board 22; the back little trunk 23 with relative seat and small lights. The gas and oil tanks, not illustrated, are located in the area of the back little trunk 23 or could be arranged and located entirely or partially visible inside the beam 1, analogously to the air filter and to other components of the scooter.

It is understood that to the frame as described, all those modifications which obtain equal utility and which adopt the same innovative concept can be made, all this without getting out of the protection limits of the present industrial model, as detailed above, as illustrated and as consecutively vindicated. In the claims, the reported references between parentheses are purely indicative and not limiting of the protection limit of the claims themselves.

## Claims

1. Frame for scooters characterised by being formed by a reticulate type beam (1) with carrier characteristics.

2. Frame according to claim 1), in which the reticulate beam (1) which composes it has a polygonal transversal section.

3. Frame according to claim 1), in which the reticulate beam (1) which composes it is formed with metallic tubes of appropriate section, suitably welded one to the other.

4. Frame according to claim 1), in which the reticulate beam (1) which composes it has a substantially "L" shaped lateral profile and it is welded at the front to the known steering support parts (2 or 9).

5. Frame according to claim 1), in which the reticulate beam (1) which composes it is prearranged for the support of the single shock absorber (10) of the front oscillating arm suspension (6), of known type, and it is prearranged at the back in any manner for the support of the shock absorber(s) for the control of the back wheel (14) associated to the engine-gearbox group (13) suitably supported with an oscillating possibility from the rear part of the reticulate beam itself.

6. Frame according to claim 6), in which the reticulate beam (1) which composes it is equipped at the back with a rise (101) which brings it in centred position with respect to the middle of the frame itself, with an attachment (16) for the single shock absorber (15) articulated with the other extremity to a bond (18) removably fixed to the engine-gearbox group (13) with the back wheel (14).

7. Frame according to claim 1), in which the reticulate beam (1) which composes it is prearranged to support in the front the part of shaft relative to the small muzzle with the headlights (20), as well as the leg guard (21) with the foot-board (22), while with the rear part the beam itself is prearranged to support a roomy little trunk (23) with the seat and with the small lights, being a large part of the beam itself left in view and inside it being located the air filter, the tanks and/or other components in addition to the just said shock absorbers.

8. Reticulate beam frame for scooters, with an piston displacement even higher than 500 cc and scooters made with such a frame, all as described in more details, as illustrated in the Figures of the three enclosed table drawings and for the purposes explained above.
